# EUROPEAN PATENT APPLICATION

(11) **EP 1 598 329 A1**
(43) Date of publication of application: **23.11.2005**
(21) Application number: 04012012.3
(22) Date of filing: 21.05.2004
(51) Int. Cl.: C05F 3/00, C05D 9/00

(54) **Fertiliser composition and method for its production**

(71) Applicant: Kemira Miljö A/S, 6705 Esbjerg Ö (DK)
(72) Inventor: Östensson, Per, 26242 Ängelholm (SE)
(74) Representative: Giver, Sören Bo

(57) **Abstract**

The invention concerns a granulated fertilizer composition comprising biofuel ash and the fibre fraction of animal manure, a method of its production as well as the use of biofuel ash for the manufacture of such a fertilizer composition.

## Description

### Field of the invention

The present invention relates to the field of fertilizers. More specifically, the invention relates to a granulated fertilizer composition comprising animal manure and biofuel ash, a method for its production as well as the use of biofuel ash for the manufacture of such a fertilizer composition.

### Background of the invention

Manure handling and disposal consume significant amount of time and resources for farmers while generating little return. All over Europe there is a strong tendency for livestock production in fewer and bigger farms. This means that the problem to get rid of manure will increase as harmonisation law in many countries (e.g. Denmark and Sweden) demands that each farmer has enough of land available for spreading the manure produced on the farm in order to prevent eutrophication of the environment. The land area required may however be reduced if manure separation processes are used to lower the content of phosphorous and nitrogen in the manure (US 5961968 and US 5622697 disclose such processes) or if commercial fertilizers are produced from the manure.

US 5593473 and DE 3913883 disclose fertilizers based on manure. A disadvantage with these fertilizers is however that inorganic compounds need to be added in order to obtain the desired ratio between the nutrients in the final fertilizer product.

The present invention overcomes the above problem by providing a new fertilizer composition and a method of its production. The new product is a combination of two types of waste products from the farm resulting in a complete fertilizer product with a high nutrient content, without the need for extra addition of nutrients.

### Summary of the invention

The fertilizer composition according to the present invention comprises biofuel ash and the fibre fraction of animal manure in the form of a granulate.

The method for producing the fertilizer composition according to the invention comprises mixing the fibre fraction of animal manure with biofuel ash and granulating the mixture.

### Detailed description of the invention

As used in the description and the appended claims, the expression "biofuel ash" is used for ash obtained from the combustion of any type of bio mass, i.e. living matter, including but not limited to, wood, bark, sawdust, wood chips, pellets, forest residues, straw, grass, animal manure, digested animal manure, peat, but excluding fossil fuels such as brown coal (lignite), black coal and oil.

Biofuel ash has got a high content of valuable nutrients such as CaO, K₂O, MgO, P₂O₅ and SiO₂. Straw ash has got an especially high content of K₂O and is especially high in wheat straw ash. Ash from animal manure has been shown to be rich in CaO, K₂Oand SiO₂. Especially preferred biofuel ash for use in the invention according to the present application is ash from straw, wood and animal manure due to their high nutrient content and due to the farmers abundant access to these type of biofuels. An advantage of the fertilizer according to the invention is that the farmer may produce the fertilizer from waste products from his own farm. This is an especially big advantage to farms that are run in an ecological way.

A preferred fertilizer according to the invention comprise ash from wheat straw, preferably at least 50% by weight wheat straw ash.

Another preferred fertilizer according to the invention comprises ash from the combustion of dewatered and/or digested animal manure. In digested animal manure organic N has been converted to NH₄. The dewatered and/or digested manure is preferably co-burned with wheat straw.

Another important property of the biofuel ash is its binding properties. When added to the fibre fraction of the animal manure having a muddy consistency, there is no need for a drying step to obtain the finished fertilizer product.

The animal manure for the fertilizer according to the invention may be manure from e.g. cattle such as pigs, cows, sheep, horses or from e.g. poultry, mink or fish farms. The manure may be used separately or in a mixture from different animals. The manure may be taken directly from the animals or after pre-treatment such as coagulation, precipitation, thickening, dewatering and treatment in a digester plant.

The fibre fraction of the animal manure is the solid portion of the liquid manure, i.e. manure containing undissolved organic and inorganic matter including precipitated dissolved inorganic and organic matter (e.g. phosphates and colloids).

The fibre fraction of the manure may be obtained by e.g. filtration, centrifugation, screw pressing etc. However, a preferred method according to the present invention comprises the steps: admixture of chemical coagulant; flocculation by the admixture of polymer and mechanical separation.

The addition of chemical coagulant to the manure reduces the soluble phosphorous level in the manure. The chemical coagulant may be a trivalent iron compound or an aluminium compound or a mixture of these compounds. Preferred coagulants are ferric sulphate and ferric chloride which are used separately or in combination. Increased amounts of coagulants results in an increased phosphorous concentration of the fibre fraction of the manure. The fibre fraction may be adjusted to contain 50-99 % by weight of the phosphorous content in the liquid manure by the addition of different amounts of coagulant(s).

Preferably 0-7 kg/m³, most preferably 1-7kg/m³ of Fe₂(SO₄)₃ is added to the liquid manure.

The liquid manure is flocculated by the addition of a polymer or a mixture of polymers, preferably 0.2-1.0 kg/m³ of polymer is added, preferably of an organic polymer.

Examples of organic polymers are cationic, non-ionic or anionic types and especially the ones approved for food processing purposes.

The liquid portion and fibre fraction of the manure is mechanically separated by e.g. band-filter, decanter, screw press.

A preferred fibre fraction of the manure comprise about 95 wt% of the organic N, 10 wt% of the NH₄N, 50-99 wt% of the P from the liquid manure.

The liquid manure may be acidified before the addition of the chemical coagulant. The acidification reduces the emission of ammonia from the manure.

Preferred acids for the acidification are sulphuric acid, hydrochloric acid, acetic acid, formic acid.

Hydrogen peroxide may be added to the manure mixture before the flocculation step. This oxidation step facilitates the filtration step and a higher amount of dry substance (DS) is reached.

The fibre fraction of the animal manure obtained according to the method of the invention comprises about 20-50 % DS, preferably about 30-50 % DS.

The fertilizer according to the invention is obtained by mixing the fibre fraction of animal manure with biofuel ash.

The fibre fraction is preferably the one obtained according to the method of the invention.

Preferably 25-50 % by weight of the fibre fraction of animal manure with a DS of about 30-50 % is mixed with 50-75% by weight of dry biofuel ash. The water content of dry biofuel ash is about 0.5-5%.

The mixture of the fibre fraction of the manure and the biofuel ash is granulated, preferably to a particle size of 0.1-6 mm, most preferably to a particle size of 1.5-6 mm.

The used granulation techniques are the ones known to the man skilled in the art.

The free water content of the granulated fertilizer is preferably 0.5-2 %.

Potassium- and sodium silicate and cement, either separately or in combination, may be added to the mixture of manure and biofuel ash to obtain suitable physical properties, such as hardness, solubility and non-dusting, of the final granulated product.

A preferred fertilizer according to the invention comprises at least 1.8% phosphorous and at least 4% potassium and thereby fulfills the requirements for a well balanced and complete organic fertilizer.

The fertilizer may however be supplemented with additional nutrients if products for certain specific applications are desired.

The following example merely serves to illustrate the present invention and are not meant to be limiting in any manner.

### Example

The example demonstrates the production of a fertilizer according to the invention and the resulting nutrient content of the finished fertilizer.

Liquid manure from pig and mink was treated separately in different containers with 5 kg Fe₂(SO₄)₃ (PIX 115 from Kemira) per ton manure. Next 200 g of a cationic polymer (Cytec C 2260) per ton manure was admixed in the different containers to flocculate the manure. The liquid portion of the manure was separated by means of a band filter and screw pressing to achieve a DS of 30%. 1 part of the fibre fraction of the pig and mink manure respectively was mixed with 1 part wheat straw ash. 1 part of the fibre fraction of the pig manure was also mixed with 0.5 part ash from the combustion of the fibre fraction of pig manure and 0.5 part wheat straw ash. The nutrient content of the manure, wheat straw ash, ash from the fibre fraction of pig manure and the finished products are disclosed in table 1.

**Table 1.**

| | P (%) | K (%) | N (%) | parts (by weight) |
|---|---|---|---|---|
| Fibre fract. pigs manure | 2.0 | 0.2 | 1.6 | |
| Fibre fract. mink manure | 3.5 | 1.5 | 1.7 | |
| Wheat straw ash | 0.6 | 21.3 | 0.4 | |
| Ash from the fibre fraction of Pigs manure | 2.4 | 0.24 | 1.9 | |
| Fertilizer product 1 (pig) | 1.3 | 10.8 | 1.0 | 1 pig fibre: 1 wheat straw ash |
| Fertilizer Product 2 (pig) | 1.8 | 5.5 | 1.4 | 1 pig fibre: 0.5 pig fibre ash: 0.5 wheat straw ash |
| Fertilizer product 3 (mink) | 2.1 | 11.4 | 1.0 | 1 mink fibre: 1 wheat straw ash |

## Claims

1. Granulated fertilizer composition comprising biofuel ash and the fibre fraction of animal manure.

2. Fertilizer composition according to claim 1, wherein the biofuel ash comprises ash from the combustion of at least one of the following: straw, wood and animal manure.

3. Fertilizer composition according to claim 1 or 2, wherein the biofuel ash comprises at least 50% by weight of wheat straw ash.

4. Fertilizer composition according to any one of claims 1-3, wherein the biofuel ash comprises ash from the combustion of dewatered and/or digested animal manure.

5. Fertilizer composition according to any one of claims 1-4, wherein the animal manure is manure from mink or pig.

6. Fertilizer composition according to any one of claims 1-5, wherein the fertilizer is an organic fertilizer.

7. Method for producing a granulated fertilizer composition comprising mixing the fibre fraction of animal manure with biofuel ash and granulating the mixture.

8. Method according to claim 7, wherein the fibre fraction of the animal manure is obtained by:
admixing liquid animal manure with chemical coagulant;
flocculation by admixing polymer;
mechanical separation;

9. Method according to claim 8, wherein the chemical coagulant is a trivalent iron compound, an aluminium compound or a mixture of these.

10. Method according to claim 9, wherein the trivalent iron compound is ferric sulphate or ferric chloride.

11. Method according to any one of claims 8-10, wherein hydrogen peroxide is added before the flocculation.

12. Method according to any one of claims 8-11, wherein the liquid animal manure is acidified.

13. Method according to any one of claims 7-12, wherein 25-50% by weight of the fibre fraction of animal manure comprising 20-50 % dry matter is mixed with 50-75% by weight of biofuel ash.

14. A fertilizer composition obtainable by the method according to claims 7-13.

15. Use of biofuel ash for the manufacture of a granulated fertilizer composition comprising the fibre fraction of animal manure.
